# EUROPEAN PATENT SPECIFICATION

(11) **EP 3 671 947 B1**
(45) Date of publication and mention of the grant of the patent: **01.05.2024**
(21) Application number: 19217384.7
(22) Date of filing: 18.12.2019
(51) Int. Cl.: H01P 1/213, H04W 48/02, H04K 3/00, H04B 1/04

(54) **NETWORK CONTROL UNIT WITH A MULTI-BAND COMBINER AND AIRCRAFT COMPRISING SUCH NETWORK CONTROL UNIT**
NETZWERKSTEUEREINHEIT MIT EINEM MEHRBANDKOMBINIERER UND FLUGZEUG MIT EINER SOLCHEN NETZWERKSTEUEREINHEIT
UNITÉ DE COMMANDE DE RÉSEAU COMPORTANT UN MULTIPLEXEUR MULTIBANDE ET AÉRONEF COMPRENANT UNE TELLE UNITÉ DE COMMANDE DE RÉSEAU

(30) Priority: 21.12.2018 EP 18215643
(43) Date of publication of application: 24.06.2020
(73) Proprietor: BULL SAS, 78340 Les Clayes-sous-Bois (FR)
(72) Inventor: HALLA, Markus, 1210 Vienna (AT); KAUER, Christian, 1210 Vienna (AT); DANZER, Hermann, 1210 Vienna (AT); TUPPA, Walter, 1210 Vienna (AT)
(74) Representative: Argyma

(56) References cited:
- CN-A- 103 684 654
- IAN C HUNTER ET AL: "Microwave Filters-Applications and Technology", IEEE TRANSACTIONS ON MICROWAVE THEORY AND TECHNIQUES, PLENUM, USA, vol. 50, no. 3, 7 August 2002 (2002-08-07) , XP011038644, ISSN: 0018-9480

## Description

The invention relates to a network control unit with a multiband combiner and an aircraft comprising such a network control unit.

The invention applies more particularly to a network control unit comprising:
- a noise generation system for generating noise signals in respective frequency bands; and
- a multi-band combiner designed for filtering and summing the noise signals into a single output signal to be provided to an antenna.

A network control unit (NCU) is used in aircrafts to mask cellular ground base transceiver stations from passenger equipment like cell phones, transmitting personal electronic devices, etc. To achieve this, the NCU emits noise signals on different frequency bands. CN 103684654 A discloses a NCU with a multiband combiner.

It is known to implement the multi-band combiner as a cavity filter combiner.

A drawback of this solution is the required volume, weight and sensitivity of the resulting multi-band combiner.

An object of the invention is therefore a network control unit comprising:
- a noise generation system for generating noise signals in respective frequency bands; and
- a multi-band combiner designed for filtering and summing the noise signals into a single output signal to be provided to an antenna;

Thanks to the invention, microstrips are used to implement at least a part of the multi-band combiner, and microstrips are far lighter and more compact than cavity filters.

The multi-band combiner comprises filters, each designed for filtering at least one of the noise signals, and at least one of the filters is implemented by microstrips.

Also optionally, each of the filters is one amongst: a low-pass filter and a band-pass filter.

Also optionally, at least one of the filters is a cavity filter.

Also optionally, at least one of the filters is a ceramic filter.

Also optionally, the multi-band combiner comprises at least one summer implemented by microstrips, for summing at least two of the noise signals.

Also optionally, the multi-band combiner comprises a first multiplexer for filtering and summing at least two first of the noise signals in order to provide a summed signal, and a second multiplexer for filtering and summing the summed signal and at least one second of the noise signals in order to provide the output signal.

Also optionally, the multi-band combiner comprises an input for receiving a base signal, and wherein the multi band-combiner is designed for combining the noise signals and the base signal into the output signal.

The noise signals comprise at least one amongst: a first noise signal in the frequency band 728 - 844 MHz, a second noise signal in the frequency band 925 - 960 MHz, and a third noise signal in the frequency band 2110 - 2170 MHz.

Another object of the invention is an aircraft comprising a network control unit according to the invention.

The invention will be better understood with the aid of the description which follows, given solely by way of example and with reference to the appended drawing, in which:

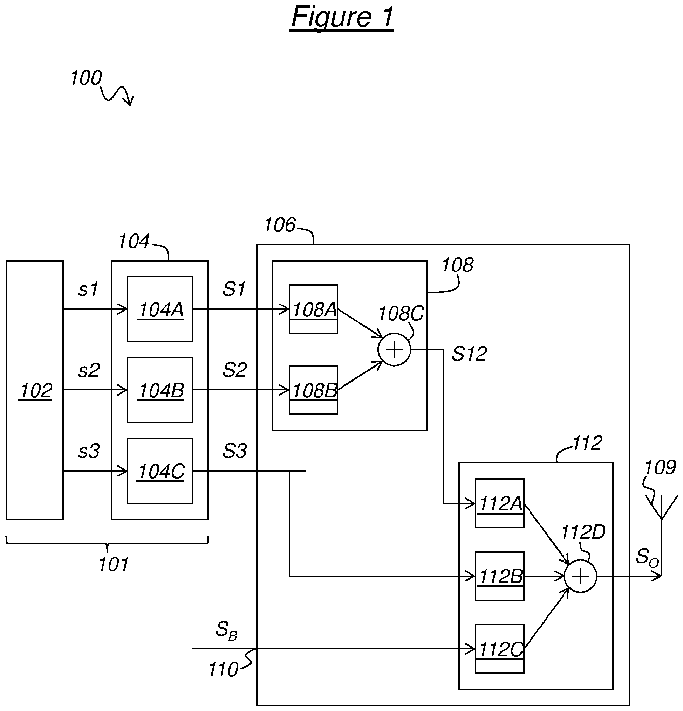

[Fig.1] figure 1 diagrammatically shows the overall structure of a network control unit according to the invention.

Referring to figure 1, an example of network control unit (NCU) 100 for an aircraft, according to the invention will now be described.

The NCU 100 comprises a noise generation system 101 for generating noise signals in respective frequency bands.

The noise generation system 101 comprises a digital noise generation unit 102 for generating low power noise signals s1, s2, s3 in the respective frequency bands. In the described example, the digital noise generation unit 102 is designed for generating three low power noise signals s1, s2, s3 in respectively the three following frequency bands: (NB700) 728 - 844 MHz, (NB900) 925 - 960 MHz and (NB2100) 2110 - 2170 MHz. It will be noted that these frequency bands are each wideband, that is to say that they each extend over more than 20 MHz. It will also be noted that at least one frequency band extends over more than 100 MHz.

The digital noise generation unit 102 is for example as described in patent US 8 159 280 B2.

The noise generation system 101 further comprises a power amplifier stage 104 comprising power amplifiers 104A, 104B, 104C for respectively amplifying the low power noise signals s1, s2, s3 in order to provide the noise signals S1, S2, S3.

Each power amplifier 104A, 104B, 104C is designed to provide a predefined amplification factor over the whole respective frequency band. For example, the power amplifier 104A is designed to provide a predefined amplification factor over the frequency band (NB700) 728 - 844 MHz. Because the frequency bands are wideband, the power amplifiers 104A, 104B, 104C are called wideband amplifiers.

The NCU 100 further comprises a multi-band combiner 106 designed for filtering and summing the noise signals S1, S2, S3 and a base signal S_{B} provided for example by a base transceiver station (BTS), a node or a enode of the aircraft, into a single output signal S_{O} to be provided to an antenna 109.

In order to receive the base signal S_{B}, the multi-band combiner 106 comprises an input 110.

The multi-band combiner 106 further comprises filters 108A, 108B, 112A, 112B, 112C, each designed for filtering at least one of the noise signals S1, S2, S3 and base signal S_{B}, and a summing system 108C, 112D for combining the noise signals S1, S2, S3, and base signal S_{B}, after filtering, into the output signal S_{O}.

More precisely, in the described example, the multi-band combiner 106 comprises a first multiplexer 108 (which is a diplexer) for combining the first and second noise signals S1, S2. The first multiplexer 108 comprises first and second band-pass filters 108A, 108B for respectively filtering first and second noise signals S1, S2. The first multiplexer 108 further comprises a summer 108C for summing, after filtering, the first and second noise signals S1, S2, in order to provide a summed signal S12.

The multi-band combiner 106 further comprises a second multiplexer 112 (which is a triplexer) for combining the summed signal S12, the third noise signal S3 and the base signal S_{B}. The second multiplexer 112 comprises a low-pass filter 112A for filtering the summed signal S12 (and in this way both the first and second noise signals S1, S2), a band-pass filter 112B for filtering the third noise signal S3 and a band-pass filter 112C for filtering the base signal S_{B}. The second multiplexer 112 further comprises a summer 112D for summing, after filtering, the summed signal S12, the third noise signal S3 and the base signal S_{B}.

Each of the filters 108A, 112A, 112B and 112C is realized using microstrips (also called "stripline structure"). Instead, the filter 108B is a ceramic cavity filter. This is because the corresponding frequency band (925 - 960 MHz) is very close to an Avionic frequency band (more precisely, the DME frequency band extending over 962 - 1214 MHz), and a ceramic cavity filter is more reliable than a microstrip filter.

It is clear that a network control unit such as described above allows for a light and compact multi-band combiner.

It should also be noted that the invention is not limited to the embodiments and alternatives described hereinabove.

## Claims

1. Network control unit (100) comprising:
- a noise generation system (101) for generating noise signals (S1, S2, S3) in respective frequency bands, wherein the noise signals (S1, S2, S3) comprise at least one amongst: a first noise signal in the frequency band 728 - 844 MHz, a second noise signal (S2) in the frequency band 925 - 960 MHz, and a third noise signal (S3) in the frequency band 2110 - 2170 MHz,
- a multi-band combiner (106) designed for filtering and summing the noise signals (S1, S2, S3) into a single output signal (S_{O}) to be provided to an antenna (109), said multi-band combiner (106) comprising filters (108A, 108B, 112A, 112B), each designed for filtering at least one of the noise signals (S1, S2, S3), and wherein the filter (108B) for filtering the second noise signal (S2) is a ceramic cavity filter operational in the frequency band [925 - 960] MHz and wherein at least one (108A, 112A, 112B) of the other filters is implemented by microstrips.

2. Network control unit (100) according to claim 1, wherein each of the filters (108A, 108B, 112A, 112B) is one amongst: a low-pass filter and a band-pass filter.

3. Network control unit (100) according to any of claims 1 or 2, wherein at least one (108B) of the filters (108A, 108B, 112A, 112B, 112C) is a cavity filter.

4. Network control unit (100) according to any of claims 1 to 3, wherein at least one (108B) of the filters (108A, 108B, 112A, 112B, 112C) is a ceramic filter.

5. Network control unit (100) according to any of claims 1 to 4, wherein the multi-band combiner (106) comprises at least one summer (108C, 112E) implemented by microstrips, for summing at least two of the noise signals (S1, S2, S3).

6. Network control unit (100) according to any of claims 1 to 5, wherein the multi-band combiner (106) comprises a first multiplexer (108) for filtering and summing at least two first (S1, S2) of the noise signals (S1, S2, S3) in order to provide a summed signal (S12), and a second multiplexer (112) for filtering and summing the summed signal (S12) and at least one second (S3) of the noise signals (S1, S2, S3) in order to provide the output signal (S_{O}).

7. Network control unit (100) according to any of claims 1 to 6, wherein the multi-band combiner (106) comprises an input (110) for receiving a base signal (S_{B}), and wherein the multi band-combiner (106) is designed for combining the noise signals (S1, S2, S3) and the base signal (S_{B}) into the output signal (S_{O}).

8. Aircraft comprising a network control unit (100) according to any of claims 1 to 7.

## Patentansprüche

1. Netzwerksteuereinheit (100) umfassend:
- ein Rauscherzeugungssystem (101) zum Erzeugen von Rauschsignalen (S1, S2, S3) in jeweiligen Frequenzbändern, wobei die Rauschsignale (S1, S2, S3) mindestens eines unter Folgenden umfassen: ein erstes Rauschsignal in dem Frequenzband 728 - 844 MHz, ein zweites Rauschsignal (S2) in dem Frequenzband 925 - 960 MHz und ein drittes Rauschsignal (S3) in dem Frequenzband 2110 - 2170 MHz,
- einen Multiband-Kombinierer (106), der zum Filtern und Summieren der Rauschsignale (S1, S2, S3) in ein einzelnes Ausgangssignal (S_{O}) ausgelegt ist, um an einer Antenne (109) bereitgestellt zu werden, wobei der Multiband-Kombinierer (106) Filter (108A, 108B, 112A, 112B) umfasst, die jeweils zum Filtern mindestens eines der Rauschsignale (S1, S2, S3) ausgelegt sind, und wobei der Filter (108B) zum Filtern des zweiten Rauschsignals (S2) ein Keramikhohlraumfilter ist, der in dem Frequenzband [925 - 960] MHz betreibbar ist, und wobei mindestens einer (108A, 112A, 112B) der anderen Filter durch Mikrostreifen implementiert ist.

2. Netzwerksteuereinheit (100) nach Anspruch 1, wobei jeder der Filter (108A, 108B, 112A, 112B) einer unter Folgenden ist: ein Tiefpassfilter und ein Bandpassfilter.

3. Netzwerksteuereinheit (100) nach einem der Ansprüche 1 oder 2, wobei mindestens einer (108B) der Filter (108A, 108B, 112A, 112B, 112C) ein Hohlraumfilter ist.

4. Netzwerksteuereinheit (100) nach einem der Ansprüche 1 bis 3, wobei mindestens einer (108B) der Filter (108A, 108B, 112A, 112B, 112C) ein Keramikfilter ist.

5. Netzwerksteuereinheit (100) nach einem der Ansprüche 1 bis 4, wobei der Multiband-Kombinierer (106) mindestens einen Summierer (108C, 112E) umfasst, der durch Mikrostreifen zum Summieren mindestens zwei der Rauschsignale (S1, S2, S3) implementiert ist.

6. Netzwerksteuereinheit (100) nach einem der Ansprüche 1 bis 5, wobei der Multiband-Kombinierer (106) einen ersten Multiplexer (108) zum Filtern und Summieren mindestens zweier erster (S1, S2) der Rauschsignale (S1, S2, S3), um ein summiertes Signal (S12) bereitzustellen, und einen zweiten Multiplexer (112) zum Filtern und Summieren des summierten Signals (S12) und mindestens eines zweiten (S3) der Rauschsignale (S1, S2, S3), um das Ausgangssignal (S_{O}) bereitzustellen, umfasst.

7. Netzwerksteuereinheit (100) nach einem der Ansprüche 1 bis 6, wobei der Multiband-Kombinierer (106) einen Eingang (110) zum Empfangen eines Basissignals (S_{B}) UMFASST, und wobei der Multiband-Kombinierer (106) zum Kombinieren der Rauschsignale (S1, S2, S3) und des Basissignals (Sb) in das Ausgangssignal (S_{O}) ausgelegt ist.

8. Luftfahrzeug, umfassend eine Netzwerksteuereinheit (100) nach einem der Ansprüche 1 bis 7.

## Revendications

1. Unité de commande de réseau (100) comprenant :
- un système de génération de bruit (101) destiné à générer des signaux de bruit (S1, S2, S3) dans des bandes de fréquence respectives, dans laquelle les signaux de bruit (S1, S2, S3) comprennent au moins l'un parmi : un premier signal de bruit dans la bande de fréquence 728 à 844 MHz, un deuxième signal de bruit (S2) dans la bande de fréquence 925 à 960 MHz, et un troisième signal de bruit (S3) dans la bande de fréquence 2110 à 2170 MHz,
- un multiplexeur multibande (106) conçu pour filtrer et sommer les signaux de bruit (S1, S2, S3) en un signal de sortie unique (S_{O}) à fournir à une antenne (109), ledit multiplexeur multibande (106) comprenant des filtres (108A, 108B, 112A, 112B), conçus chacun pour filtrer au moins l'un parmi les signaux de bruit (S1, S2, S3), et dans laquelle le filtre (108B) destiné à filtrer le deuxième signal de bruit (S2) est un filtre à cavité céramique opérationnel dans la bande de fréquence [925 à 960] MHz, et dans laquelle au moins l'un (108A, 112A, 112B) parmi les autres filtres est mis en oeuvre par microbandes.

2. Unité de commande de réseau (100) selon la revendication 1, dans laquelle chacun des filtres (108A, 108B, 112A, 112B) est l'un parmi : un filtre passe-bas et un filtre passe-bande.

3. Unité de commande de réseau (100) selon l'une quelconque des revendications 1 ou 2, dans laquelle au moins l'un (108B) parmi les filtres (108A, 108B, 112A, 112B, 112C) est un filtre à cavité.

4. Unité de commande de réseau (100) selon l'une quelconque des revendications 1 à 3, dans laquelle au moins l'un (108B) parmi les filtres (108A, 108B, 112A, 112B, 112C) est un filtre céramique.

5. Unité de commande de réseau (100) selon l'une quelconque des revendications 1 à 4, dans laquelle le multiplexeur multibande (106) comprend au moins un sommateur (108C, 112E) mis en oeuvre par des microbandes, pour sommer au moins deux des signaux de bruit (S1, S2, S3).

6. Unité de commande de réseau (100) selon l'une quelconque des revendications 1 à 5, dans laquelle le multiplexeur multibande (106) comprend un premier multiplexeur (108) destiné à filtrer et à sommer au moins deux premiers (S1, S2) parmi les signaux de bruit (S1, S2, S3) afin de fournir un signal sommé (S12), et un deuxième multiplexeur (112) destiné à filtrer et à sommer le signal sommé (S12) et au moins un deuxième (S3) des signaux de bruit (S1, S2, S3) afin de fournir le signal de sortie (S_{O}).

7. Unité de commande réseau (100) selon l'une quelconque des revendications 1 à 6, dans laquelle le multiplexeur multibande (106) comprend une entrée (110) destinée à recevoir un signal de base (S_{B}), et dans laquelle le multiplexeur multibande (106) est conçu pour combiner les signaux de bruit (S1, S2, S3) et le signal de base (S_{B}) en signal de sortie (S_{O}).

8. Aéronef comprenant une unité de commande de réseau (100) selon l'une quelconque des revendications 1 à 7.
